## Europäisches Patentamt

## European Patent Office

## Office européen des brevets

(11) Veröffentlichungsnummer: **0 373 231**
**A1**

# (12) EUROPÄISCHE PATENTANMELDUNG

(21) Anmeldenummer: **88120723.7**

(22) Anmeldetag: **12.12.88**

(51) Int. Cl.5: **B05D 1/00, D06N 7/00**

Ein Antrag gemäss Regel 88 EPÜ auf Hinzufügung eines Blattes mit 2 Zeichnungen liegt vor. Über diesen Antrag wird im Laufe des Verfahrens vor der Prüfungsabteilung eine Entscheidung getroffen werden (Richtlinien für die Prüfung im EPA, A-V, 2.2).

(43) Veröffentlichungstag der Anmeldung:
**20.06.90 Patentblatt 90/25**

(84) Benannte Vertragsstaaten:
**AT CH DE FR GB IT LI**

(71) Anmelder: **KUFNER TEXTILWERKE GMBH**
**Postfach 70 11 49**
**D-8000 München 70(DE)**

(72) Erfinder: **Kufner, Josef**
**c/o Kufner Textilwerke GmbH Postfach 70 11 49**
**D-8000 München 70(DE)**
Erfinder: **Hefele, Josef, Dr.**
**c/o Kufner Textilwerke GmbH Postfach 70 11 49**
**D-8000 München 70(DE)**

(74) Vertreter: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) **Verfahren zum rasterförmigen Beschichten von Kunststoff-Folien mit Schmelzklebern und Applikationsart der beschichteten Folie.**

(57) Die Erfindung betrifft ein Verfahren zum rasterförmigen Beschichten von flexiblen Kunststoff-Folien mit Schmelzklebern und Verbinden der Folien mit zuzukaschierenden Flächengebilden durch thermisches Verkleben der Schmelzkleberschicht. Bei dem obigen Verfahren wird ein Verbund aus vorgeformter Kunststoff-Folie mit einem flexiblen und verzugsfreien Zwischenträger erzeugt, die Kunststoff-Folienseite des Verbundes mit der rasterförmigen Schmelzkleberschicht versehen und der Zwischenträger vor oder nach dem thermischen Verkleben der Schmelzkleberschicht mit dem zuzukaschierenden Flächengebilde abgezogen. Gegenstand der Erfindung ist weiterhin eine Transfereinheit der beschichteten Folie, die aus einem Verbund aus einem abziehbaren Zwischenträger, einer Folie und einer daraufsitzenden rasterförmigen Schmelzkleberbeschichtung besteht, wobei diese Einheit zum Aufbügeln der schmelzkleberbeschichteten Folie auf Gewebe, Gewirke, Vliese, Webgewirke, Wirkvliese, Webwirkvliese, Papiere, Pappen, Natur- und Kunstleder, Schaumstoffe, Metallfolien, Kunststoff-Folien, Holzfaserfolien u.a. verwendet wird.

## Verfahren zum rasterförmigen Beschichten von Kunststoff-Folien mit Schmelzklebern und Applikationsart der beschichteten Folie

Die Erfindung beschreibt ein Verfahren zum rasterförmigen Beschichten von Kunststoff-Folien, insbesondere von flüssigkeitsdichten Membranfolien mit hoher Wasserdampfdurchlässigkeit sowie eine Applikationsart der beschichteten Folien, die nach diesem Verfahren gefertigt werden können.

Die rasterförmige Beschichtung von Kunststoffbahnen ( = Kunststoff-Folien) mit Heißsiegelklebern ( = Schmelzklebern) is bereits im Gebrauchsmuster 7211197 (Kufner) erwähnt, und auch die deutsche Patentschrift 1771516 von Saladin nimmt in Verbindung mit einer rasterförmigen Schmelzkleberbeschichtung auf Folien Bezug. Durch Beschichten der Folien mit Schmelzklebern in Rasterform ist es möglich, den gewünschten weichen Verbund der Folien mit Flächengebilden, wie Textilien, zu erzeugen, wie er etwa bei der Vorarbeitung der Verbundstoffe zu Bekleidungsstücken erforderlich und durch einen flächigen, nichtrasterförmigen Verbund bei gleicher Haftfestigkeit nicht zu erreichen ist. Besonders ausführlich ist später die rasterförmige Punktbeschichtung von Thermoplastfolien und insbesondere von thermoplastischen Membranfolien und die Anwendung der beschichteten Folien in der europäischen Patentanmeldung 0238014 A 2 beschrieben worden. Wie die Anmeldung angibt, erfordert die Beschichtung besondere Maßnahmen, um sie ausführen zu können. So müssen die vorgebildeten Folien beim Abroll- und Beschichtungsvorgang ganz spannungslos abgewickelt und mit minimaler Längsspannung in und durch die Beschichtungsanlage geführt werden. Weiterhin muß die Folie nach dem Beschichten mittels Breithaltern an den Rändern gefaßt werden, was eine Verschmutzung der Breithalter mit Schmelzklebermasse zur Folge hat und außerdem mit Randabfall, der abgeschnitten und verworfen werden muß, behaftet ist. Bei hydrophilen Folien mit Quellneigung rollen die Kanten der Folienbahn ein. Um dieses Einrollen zu vermeiden, müssen die Kanten beidseitig mit Heißluftdüsen unmittelbar hinter dem Druckaggregat angeblasen werden. Schließlich ist es notwendig, die Beschichtung vorsichtig und weit unterhalb des Schmelz- oder Erweichungsbereiches der Folien zu trocknen und zu sintern, wodurch vielfach die Anwendung waschfester Schmelzkleber, beispielsweise kochwaschbeständiger Kleber mit erhöhtem Schmelzbereich ausscheidet, und der Einsatzbereich mancher Folien besonders dann eingeschränkt ist, wenn das Folienmaterial einen Schmelzbereich besitzt, der nicht wesentlich über dem der Kleber liegt, wie dies etwa bei einigen thermoplastischen Membranfolien mit besonders guter Wasserdampfdurchlässigkeit der Fall ist. Eine ausreichende Kleberverankerung auf der Folie ist dabei nicht möglich. Auch beim Aufbügeln der rasterförmig mit Schmelzkleber beschichteten Thermoplastfolien auf textile Flächengebilde können beim Bügelvorgang und wenn die Flächengebilde später in Kleidungsstücken Feuchtigkeitseinwirkungen unterliegen und Wasch- oder Chemischreinigungsvorgängen unterworfen werden, starke Schrumpferscheinungen auftreten. Auch die Haftung des Kleberverbundes kann dabei unter Ausbildung von Blasen und völligen Loslösungen unter das erforderliche Minimum abfallen, und die Wasserdampfdurchlässigkeit kann - beim Versuch die Haftprobleme durch Anheben der Klebermenge zu mindern - unerträglich geschwächt werden. Bei Verwendung erhöhter Klebermengen wird der Verbund aus Folie und Flächengebilde zudem noch unerwünscht steifer. Diese vielfachen störanfälligen Manipulationen und Erscheinungen sind in einigen Fällen umso ausgeprägter, je dünner die Folie beschaffen ist. Sie schränken daher zusätzlich die Sicherheit der Beschicht-und der Anwendbarkeit der Schmelzkleber bei dünnen Folienstärken, wie sie ebenfalls bei gut wasserdampfdurchlässigen und weichen Membranfolien vorliegen, ein. Daher besteht ein Bedarf nach Auffindung eines Verfahrens und einer Applikationsart der Folien, welche diese erwähnten Schwierigkeiten nicht besitzen.

Überraschenderweise wurde nun gefunden, daß die erwähnten mannigfachen Probleme abgemildert werden bzw. völlig verschwinden durch eine in Anspruch 1) der Erfindung beschriebene einfache Verfahrensweise, welche auch das rasterförmige Beschichten vorgeformter Kunststoff-Folien geringer Stärke und von niederem Schmelzbereich nachteilsfrei erlaubt und sicherstellt, daß der Verbund der Folien mit Flächengebilden wasch = und chemischreinigungsfest erzeugt werden kann.

Dieses Verfahren zum rasterförmigen Beschichten von flexiblen, vorzugsweise thermoplastischen Kunststoff-Folien mit Schmelzklebermassen und Verbinden der Folien mit aufzukaschierenden Flächengebilden durch thermisches Verkleben der aufgebrachten Schmelzkleberschicht ist dadurch gekennzeichnet, daß

a) ein Verbund aus einer vorgeformten und gegebenenfalls schrumpfreduzierten Kunststoff-Folie der Stärke 10 - 100 µm, vorzugsweise 10 - 35 µm, mit einem flexiblen und verzugsfreien Zwischenträger erzeugt,

b) die Kunststoff-Folienseite des Verbundes mit der rasterförmigen Schmelzkleberschicht versehen und

c) der Zwischenträger vor oder nach dem thermischen Verkleben der Schmelzkleberschicht mit einem aufzukaschierenden Flächengebilde abgezogen wird.

Eine bevorzugte Applikationsart auf der Grundlage dieses Verfahrens ist in Anspruch 22 mit einer Art Transfereinheit aus abziehbarem Zwischenträger, Folie und daraufsitzender rasterförmiger Schmelzkleberbeschichtung beschrieben, welche zum Aufbügeln der schmelzkleberbeschichteten Flie auf Gewebe, Vliese, Webgewirke, Webwirkvliese, Papiere, Pappen, Natur-und Kunstleder, Schaumstoffe, Metallfolien, Kunststoff-Folien, Holzfaserfolien u.a. verwendet wird.

Zum Verbinden der vorgebildeten, vorzugsweise thermoplastischen und gegebenenfalls in einem Vorbehandlungsprozess schrumpfreduzierten Kunststoff-Folie mit einem Zwischenträger kann man dem Beschichtungsvorgang einen einfachen Kaschiervorgang vorschalten, der teilweise auch keinen zusätzlichen Arbeitsprozess benötigt.

In einer sehr einfachen Verfahrenstechnik kann man die vorgebildete, vorzugsweise thermoplastische und gegebenenfalls schrumpfreduzierte Kunststoff-Folie auf einen Zwischenträger aufkaschieren durch Anwendung von Druck und Temperatur, wozu man beispielsweise eine Plattenpresse, eine Durchlaufpresse oder ein Kaschierwerk verwenden kann. Bei Verwendung eines Kaschierwerkes kann man die Folie zwischen den bahnförmigen Zwischenträgern und einem stark abweisenden Trettuch, z.B.einem stark silikonisiertem Trenntuch mit geschlossener Trennschicht, über eine oder mehrere Heizwalzen führen, die etwa 10 - 15° C über dem Schmelzbeginn der Folie beheizt sind, und anschließend über einer nachgeschalteten Kühlwalze abkühlen. Nach dem Abziehen des Trenntuches bleibt die Folie am Zwischenträger haften (s.Beispiele). Falls dabei die erforderliche Temperatureinwirkung zu hoch sein sollte, kann man anstelle der thermischen Kaschierung mittels eines Haftstriches zwischen Träger und Folie, der fallweise flächig oder rasterförmig aufgetragen werden kann, wählen. Beide oder eine der beiden Kaschiertechniken kann man beispielsweise anwenden bei üblichen porenfreien Kunststoff-Folien mit einer Stärke von etwa 30 - 100 μm, welche keine oder nur eine geringe Wasserdampfdurchlässigkeit besitzen, wie dies beispielsweise bei üblichen Polyamid-, Polyester, PVC-, Polyesterurethan-, Polyetherurethan-Folien der Fall ist.

Es ist aber auch möglich, beide oder eine der beiden Kaschiertechniken zu benutzen bei Anwendung von Membranfolien der Stärke 10 - 35 μm, die eine brachbare Wasserdampfdurchlässigkeit besitzen, um sie z.B. für atmungsaktive Bekleidung, wie Jacken, Mäntel oder Schuhe, einsetzen zu können. Die Wasserdampfdurchlässigkeit solcher Membranfolien soll im Bereich von 700 - 1400 g Wasser/m² Austauschfläche in 24 Stunden sein bei einem Feuchtigkeitsgefälle von 85% auf 0-1% relativer Feuchte und einer Temperatur von 23° C, an der schmelzkleberfreien, unkaschierten Folie gemessen. Vorgefertigte, porenfreie Folien dieser Art können beispielsweise durch Extrudieren von thermoplastischen Polyamid-Elastomeren hergestellt werden, wie sie von Elias & Vohwinkel "Neue polymere Kunststoffe für die industrielle Anwendung", 2. Folge, Hansa-Verlag 1983, Seite 125 - 134, und in dort angegebenen Literaturstellen beschrieben sind. Die Polymermoleküle dieser Polyamid-Elastomeren enthalten ein kristallines Polyamid-Hartsegment und ein amorphes Weichsegment,welches überwiegend oder ganz aus polymeren Ethergruppen besteht. Die Elastomere sind Copolyetheramide oder Copolyesteretheramide und werden auch als Poly-Ether-Block-Amide oder segmentierte Polyetheramide bezeichnet. Ein geeignetes Handelsprodukt ist beispielsweise das Poly-Ether-Block-Amid der Bezeichnung Vestamid E 40 S3 von der Firma Chemische Werke Hüls, welches einen Schmelzbereich von etwa 143 - 148° C besitzt, und dessen porenfreie und ggf. durch thermische Vorbehandlung (Tempern) schrumpfreduzierte Extrusions- oder Blas-Folien der Stärke 10 - 35 μm für die thermische Kaschierung gut geeignet sind. Die Folie kann auch flächig oder vorzugsweise punktrasterförmig unter Anwendung eines Haftklebers, der wasserhaltig sein kann, mit einem Zwischenträger verbunden werden. Die Folie ist hochelastisch und besitzt die nötige Wash- und Reinigungsfestigkeit, um sie im Bekleidungssektor einsetzen zu können. Besonders zweckmäßig ist die Anwendung eines punktrasterförmig auf den Zwischenträger aufgetragenen Haftklebers, wenn Membranfolien aufkaschiert werden sollen, welche eine relativ hohe Feuchtigkeitsaufnahme und einen hohen Schmelzbereich besitzen, wie dies beispielsweise bei dem Handelsprodukt der Bezeichnung "Sympatex (R)" der Fall ist. Der Schmelzbereich liegt hier bei ca. 220° C und die Feuchtigkeitsaufnahme in Wasser bei ca. 30%. Dieses Produkt basiert nicht auf thermoplastischen Polyamid-Elastomeren, sondern auf thermoplastischen Polyester-Elastomeren und besitzt als porenfreie Folie ebenfalls eine gute Wasserdampfdurchlässigkeit im Bereich von ca 1.200 g Wasser/m² unter den oben angegebenen Testbedingungen. Auch die erforderliche Wash- und Reinigungsfestigkeit ist vorhanden. Vergleichbare Produkte sind ebenfalls in der oben erwähnten Fachliteratur von Elias & Vohwinkel auf Seite 121 - 124 und in den dort angeführten Literaturzitaten beschrieben. Die Polymermoleküle der thermoplastischen Polyester-Elastomeren bestehen aus einem kristallinen Hartsegment aus Polyterephthalsäureester und aus einem amorphen Weichsegment mit polymeren Ethergruppen. Bei dem Handelsprodukt der Bezeichnung Sympatex (R)" sind dies Hartsegmente aus Polyterephthalsäurebutlyester und Weichsegmente aus Polyethylenoxyd. Auch diese Produkte sind hochelastisch und können mit der erforderlichen Wasch-/Chemisch-Reinigungsbeständigkeit und Wasserdampfdurchlässigkeit für Membranfolien ausgewählt werden.

Weiterhin sind neuerdings thermoplastische Polyurethan-Elastomere aus Polyurethan- und Polyethersegmenten bekannt geworden, die ebenfalls als Membranfolien für das erfindungsgemäße Verfahren verwendet werden können. Auch hier kann fallweise die thermische Kaschierung oder die Haftkleberkaschierung auf dem Zwischenträger erfolgen. Schließlich sind aber auch mikroporöse Folien wie Polyetrafluorethylen-Folien mit mikroporöser Struktur (Handelsbezeichnung "Goretex (R)") bei dem erfindungsgemäßen Verfahren anwendbar unter Benutzung der Haftkleberkaschierung auf dem Zwischenträger. Die vorzugsweise angewandten atmungsaktiven, flüssigkeitsdichten und wasserdampfdurchlässigen Folien können auch Mischungen oder Copolymere der angeführten Elastomere sein. Porenfreie Membranfolien auf der Basis von thermoplastischen Polyamid-Elastomeren werden in einer bevorzugten Ausführungsform der vorliegenden Erfindung thermisch auf einen Zwischenträger aufkaschiert.

Auch können Verbundfolien im Rahmen der Erfindung Anwendung finden, insbesondere solche, deren eine Folienseite erheblich von der anderen abweicht. Die Verbundfolie kann vorteilhaft aus einer Kernschicht und einer Auflageschicht bestehen, die ggf. selbst Siegeleigenschaften aufweist. Auch Antistatica, Blockieragentien, Füllstoffe, Gleitmittel, Pigmente u.ä. kann die Kunststofffolie besitzen. Die aus Zwischenträger, Folie und rasterförmiger Schmelzkleberbeschichtung gefertigte Transfereinheit kann die Anwendbarkeit in der Konfektions-, Schuh-, Pelzindustrie etc. wesentlich erleichtern, wenn die Folie dort auf Zuschnitteile von Textilien, Pelze oder Leder aufgebügelt werden soll. Während die nackten beschichteten Membranfolien ohne Träger besonders dann, wenn die Basisfolie nur 10 - 35 µm stark ist, auf Zuschnitteilen von Bekleidungsstücken o.ä. nur schwierig exakt zu positionieren sind, ist das Auflegen der mit den stabilen Zwischenträgern verbundenen Transfer-Folien ohne jegliche Problematik und kann arbeitszeitsparend ausgeführt werden. Auch das Zuschneiden ist erleichtert. Besonders vorteilhaft aber ist, daß die Anfertigung des Intermediärverbundes aus Zwischenträger, Folie und rasterförmiger Schmelzkleberbeschichtung keine Probleme beim Beschichten verursacht. Das Beschichten kann unter Spannung erfolgen, Randabfall wird vermieden und ein Einrollen der Kanten tritt nicht auf. Es können auch solche Folien mit besonders guter Wasserdampfdurchlässigkeit, die einen niederen Schmelzbereich besitzen, der nicht wesentlich höher als der des Schmelzklebers liegt, ohne Schwierigkeiten beschichtet und mit Flächengebilden haftfest verbügelt werden, ohne daß der Verbund später beim Tragen, Chemischreinigen oder Waschen Schrumpf-, Blasen- und Loslösungserscheinungen zeigt. Auch sehr dünne Folien mit besonders hoher Wasserdampfdurchlässigkeit sind problemlos beschichtbar. Bei Benutzung von thermisch auf Zwischenträger aufkaschierten Membranfolien aus relativ nieder schmelzenden thermoplastischen Polyamid-Elastomeren kann der Zwischenträger beispielsweise aus einem Kraftpapier bestehen, das einseitig mit einer dünnen porösen Trennschicht versehen ist, die aus Silikon, Fettsäuresalzen, Fluorcarbonharzen u.ä. bestehen kann. Gemäß anliegendem Beispiel 1 kann man bei Anwendung einer Polyamid-Elastomer-Folie mit einem niederem Schmelzbereich von beispielsweise 143-148°C die ggf. zuvor durch Tempern bei ca. 100 - 125°C schrumpfreduzierte Folie auf ein schwach silikonisiertes Kraftpapier der Stärke 40-60 g/m² bei einer Temperatur von ca. 160°C und einem Druck von ca. 400 p/cm² auf einer Plattenpresse aufbügeln unter Mitbenutzung eines stark silikonisierten Abdecktuches. Unter vergleichbaren Bedingungen kann die Aufbügelung auf das Kraftpapier auch auf einer Durchlaufpresse oder auf einem Kaschierwerk erfolgen. Der Verbund aus Folie und schwach anhaftenden Kraftpapier wird dann rasterförmig mit einer Schmelzkleberpaste auf Basis eines kochwaschfesten Copolyamides oder Copolyesters mit einem Schmelzbereich von 125-130°C beschichtet und bei ca 140-160°C getrocknet und gesintert. Die so gefertigte Transfereinheit wird direkt an den Weiterverarbeiter ausgeliefert, der damit in die Lage versetzt wird, jedes beliebige Flächengebilde, wie Textil, Leder, Schaumstoff, Pelz, individuell mit einer Membranfolie durch einfaches Auflegen von Zuschnitten aus der Transfer-Einheit, Aufbügeln bei 135-140°C Bügeltemperatur und Abziehen des Zwischenträgers nach dem Erkalten zu versehen. Bei Einsatz geeigneter kochwaschfester Schmelzkleber kann der Endverbund auch Waschtemperaturen über 70°C ausgesetzt werden, ohne daß eine wesentliche Lockerung des Haftverbundes auftritt. Benutzt man hingegen höher schmelzende thermoplastische Elastomere und insbesondere thermoplastische Polyester-Elastomere mit hohem Schmelzbereich , so kann man auch auf einen Zwischenträger aus unbehandeltem Kraftpapier zurückgreifen und diesen punktrasterförmig mit einer genügend angedickten, pastösen und wasserhaltigen Haftmasse versehen, deren Hafteffekt durch Antihaftzusätze wie Paraffin, Wachs, Fettsäure oder Silikon, abgeschwächt ist und die sich nach dem Kaschier- und Trockenvorgang von der Folie abziehen läßt. Auch hier kann die Transfereinheit aus Zwischenträger, Folie und Schmelzkleber an den Weiterverarbeiter zur Verbügelung als Zuschnitt geliefert werden. Beim Abziehen des Trägers nach dem Verbügeln wird der Haftstrich zusammen mit dem Kraftpapier abgetrennt. Ein Beispiel dafür ist ebenfalls angefügt. Anstelle des Kraftpapiers kann man jedoch als Zwischenträger auch Trägerbahnen verwenden, die die Produktionsstätte der Folienbeschichtung nicht verlassen und in dieser Produktionsstätte im Kreislauf für längeren Zeitraum immer wieder Verwendung finden können. Besonders geeignet sind nichttextile oder textile, insbesondere geschlossene, feinfädig ausgewebte,verzugsfreie und temperaturbeständige Trägerbahnen, welche mit einer Trennschicht versehen sein können, aber auch ohne Trennschicht verwendet werden können. Bei Verwendung dieser Trägerbahnen wird die darauf aufgetragene und dann rasterförmig mit Schmelzkleber beschichtete Folie nach dem Beschichtungsvorgang abgezogen und getrennt aufgewickelt. Der Zwischenträger kann auch ein umlaufendes Band darstellen, auf welches die Folie aufkaschiert, die dann unmittelbar danach in gleichem Arbeitsgang mit der rasterförmigen Beschichtung versehen, welche getrocknet und gesintert wird. In diesem Falle kann das umlaufende Zwischenträgerband zweckmäßigerweise aus obigen geschlossenen, feinfädig ausgewebten und verzugsfreien Trägermaterial, aber auch aus einem Gummi - oder Metallband (rostfreier Stahl oder Messing) bestehen. Die Wiederverwendung der Trägerbahn in der Produktionsstätte der Filmbeschichtung ist auch möglich, wenn die beschichtete Folie unmitelbar nach dem Beschichtungsvorgang auf ein weiteres flexibles Flächengebilde, wie Gewebe, Gewirk, Webgewirk, Vlies, Wirkvlies u.a., aufkaschiert und der Kaschierverbund sofort vom Träger wieder abgezogen wird (z.B. in einem kontinuierlichem Verfahren mit umlaufenden Zwischenträgerband). In diesem Falle geht der Kaschierverbund mit dem Flächengebilde und nicht die Transfer-Einheit zur Weiterverwendung in die Konfektions-, Schuh-, Täschner,- Pelzindustrie etc. und wird als Zwischenfutter oder als Futterstoff verwendet. Die auf die Folien seite des Transferverbundes auz Zwischenträger und Folie aufgesetzte Schmelzkleberbeschichtung wird hauptsächlich in Punktform, vorzugsweise mit 100-1000 Punkten/inch², ausgeführt. Die Punkteanordnung kann regelmäßig oder unregelmäßig sein und das Auftragsgewicht kann zwischen 6 und 20 g/m2 liegen. Bei der Beschichtung von Membranfolien kann die rasterförmige Flächenabdeckung der Folie mit Schmelzkleber nieder im Bereich von 5-10% der Gesamtfläche liegen, um die Wasserdampfdurchlässigkeit durch den Schmelzkleberauftrag nicht nennenswert zu beeinträchtigen. Gut geeignet ist die Pastenbeschichtung im Siebdruck, aber auch eine Pulverpunktbeschichtung nach dem sog. Powder-Point-Verfahren von Saladin kann in Frage kommen, wenn der Schmelzbeginn der Folie über ca. 200°C liegt, was bei oben erwähnter Folie aus Polyester-Elastomer der Fall ist. Hierbei ist es sogar möglich, das Verbinden der Folie mit dem Folienträger und die rasterförmige Beschichtung im gleichen Moment an der Beschichtungsanlage auszuführen. Auf den unkaschierten und unterhalb des Schmelzbeginns der Folie über Heizwalzen beheizten Träger wird die Folie glatt aufgelegt und gemeinsam mit dem Träger in den Preßspalt zwischen Gravurwalze und angepresster Heizwalze eingeführt. Zwischen Träger und Folie wird nur eine sehr geringe Haftung erzeugt, jedoch wird die Pulverbeschichtung von der Gravurwalze auf die Folie übertragen und auf der nachfolgenden Heizstrecke durch starkes Umschlingen der zweiten Heizwalze und erforderlichenfalls durch weitere nachfolgende Temperatureinwirkung zwischen Schmelzbereich des Klebers und Schmelzbeginn der Folie angesintert, bevor Träger und Folie dann über eine Ausgangsheizwalze abgeführt und wieder voneinander getrennt werden. Der Zwischenträger kann auch hier aus einem umlaufenden Band, beispielsweise aus temperaturbeständigem Gewebe (z.B. Aramid-Gewebe), das zweckmäßigerweise mit Silikon beschichtet ist, bestehen (s. Beispiel unten).

Besonders geeignet sind Schmelzkleber auf Basis von Copolyamiden und Copolyestern, deren Schmelzbeginn zwischen ca. 70 and 130°C liegt. In einer vorteilhaften Ausführungsform enthalten die Schmelzkleberbeschichtungsmassen thermoplastisches Polyurethan. Den Schmelzklebern können auch Weichmacher beigefügt sein. Im Falle der Pastenbeschichtung werden zweckmäßigerweise wässrige Pastenmischungen angewandt, in denen die Schmelzkleber in Feinpulverform unter 80 $\mu$m Korngröße eingerührt sind und welche die üblichen Verdicker- und Schutzkolloidzusätze enthalten. Bei Ausführung der Pulverpunktbeschichtung werden wie üblich Mahlpulver im Kornspektrum zwischen ca. 40 $\mu$m bis max. 200 $\mu$m verwendet.

In manchen Fällen kann es wünschenswert sein, die Schmelzklebermasse beim Verbinden der beschichteten Folie mit einem Flächengebilde von einem schmelzfähigen in einen nicht mehr schmelzfähigen Zustand zu überführen. Hier können dem Schmelzkleber feste pulverförmige oder in sog. Ballons inkludierte reaktive Komponenten einverleibt werden, welche erst beim Kaschier- (= Bügel-, Fixier-) vorgang durch Aufschmelzen bzw. durch Öffnen der Ballonhüllen reaktiv werden und dabei eine Molekülvernetzung der Schmelzkleberanteile bewirken. Bei Polyamiden kann man beispielsweise feste Isocyanate , wie Phenyltriisocyanat, hinzufügen. Um eine ausreichende Vernetzung zu erreichen, kann es jedoch erforderlich sein, höhere Temperaturen und längere Bügelzeiten anzuwenden, wie das bei einer üblichen Schmelzkleberfixierung der Fall ist. Anstelle der Schmelzkleber mit inkludierten Reaktiv-Komponenten können auch solche Schmelzkleber Verwendung finden, die erst beim Verbügeln durch chemische Umwandlung bzw. chemischen Zerfall reaktive Komponenten freisetzen. Ein derartiges Produkt ist beispielsweise der Polyesterschmelzkleber Griltex D 1268 (Lieferant Firma Ems Chemie Domat/Ems, Schweiz). Der Schmelzbeginn liegt bei ca. 70° C und der Zerfalls- und Vernetzungsbeginn bei ca. 130° C.

Die Erfindung soll sich nicht nur auf ein Herstellungsverfahren, sondern auch auf eine Transfereinheit der beschichteten Folie, bestehend aus einem Verbund eines Zwischenträgers, einer Folie und einer daraufsitzenden, rasterförmigen Schmelzkleberbeschichtung beziehen, welcher Verbund zum Aufbügeln der schmelzkleberbeschichteten Folie auf Gewebe, Gewirke, Vliese, Webgewirke, Wirkvliese, Webwirkvliese, Papiere, Pappen, Natur- und Kunstleder, Schaumstoffe, Metallfolien, Kunstoff-Folien, Holzfaserfolien u.a. verwendet wird.

Die vorliegende Erfindung wird an Hand der nachstehenden Beispiele näher ausgeführt.

Beispiel 1:

Auf den unteren Schieberahmen einer aus einer oberen beheizten Preßplatte, einer beheizten und mit Filz überzogenen Unterplatte, dem unteren Schieberahmen mit Nesseltuchbespannung und einem oberen Abdeckrahmen mit Gewebebespannung bestehenden Plattenpresse legt man einen Abschnitt einer Kraftpapierbahn der Stärke 50 g/m², welcher einseitig mit einer schwachen porösen Silikonharzbeschichtung versehen ist, mit der Silikonharzbeschichtung nach oben auf. Auf die Silikonharzbeschichtung wird eine Reckfolie, die zuvor durch Tempern bei ca. 100 - 135° C schrumpfreduziert worden ist, glatt aufgezogen. Die Schrumpfreduzierung ist beispielsweise dadurch bewerkstelligt worden, daß die Reckfolie gemeinsam mit einer Treufolie, einem Trenngewebe oder Trennpapier (alle wiederverwendbar) in eine Rolle eingewickelt wird, die mehrere Stunden in einem Wärmeschrank einer Temperatur von beispielsweise 130° C ausgesetzt wird. Bei der Behandlung ändert sich das Flächengewicht nicht. Die thermisch stabilisierte und elastische Polyamid-Elastomer-Folie besteht aus Polyamid 12- und Polyethylenoxidsegmenten und hat folgende Kenndaten: Schmelzbeginn: 145°, Meltindex bei 160° C und 2,16 kg Belastung 7,5 g/10 Min., Wasserdampfdurchlässigkeit 1.200 g/m² in 24 Stunden bei 23° C und einem Feuchtigkeitsgefälle von 85 % auf 0 - 1 % rel. Luftfeuchte, Dicke 15 μm. Die Folie wird dann mit einem Abschnitt eines Trennpapiers aus Kraftpapier mit kräftiger und nahezu oder ganz porenfreier Silikonharzbeschichtung (Silikonharzseite zur Folie) abgedeckt. Die Oberplatte ist auf 150° C, die Unterplatte auf 100° C aufgeheizt. Man legt den Abdeckrahmen auf, schiebt den Schieberahmen ein und verschließt die Presse bei einem Druck von 400 p/cm² für 20 sec. Nach dem Öffnen der Presse und Erkalten der 3er-Lage aus Zwischenträger, Folie und stark silikonisiertem Trennpapier wird das Trennpapier abgezogen. Die Folie verbleibt auf dem Zwischenträger mit einer Haftung von ca. 2 - 10 p/cm.

Die Folienseite des Verbundes aus Zwischenträger und Folie wird anschließend mit Schmelzkleberpaste in regelmäßigem 11 Mesh-Raster (= 27 Punkte/cm²) im Siebdruck beschichtet. Die verwendete Siebschablone hat eine Wandstärke von 0,16 mm und einen Gravurloch von 0,6 mm. Die Schmelzkleberpaste besteht aus:

180 GT Wasser
1,8 GT Amonstearat
100 GT Griltex 2P1 (= Copolymerisatpulver der Körnung unter 80 μm aus Laurinlactam, Caprolactam und AH-Salz; Lieferant Ems-Chemie, Domat/Ems)
5 GT Isaplast PU (= Sulfonamid-Weichmacher der Firma Böhme Chemie, Geretsried )
20 GT Impranil DLH (= Polyestermethan-Dispersion der Firma Bayer)
5 GT Hoe-Verdicker V 3748 (= Polyacrylat-Verdikker der Firma Hoechst)

Die Auftragsmenge beträgt 7 g/m² Trockenmasse. Der pastenbeschichtete Verbund wird bei 135 - 150 ° C getrocknet und gesintert. Die getrocknete und gesinterte Beschichtung belegt ca. 7 % der Folienfläche.

Der Transferverbund aus Zwischenträger, Folie und Schmelzkleberbeschichtung wird zum Anfertigen eines Sportsakkos oder Regenmantels benützt. Sämtliche Oberstoffzuschnitte für das Sportsakko oder den Regenmantel werden mit entsprechenden Zuschnitten des Transferverbundes bei einer Temperatur von 135 - 145° C (zwischen Folie und Oberstoff gemessen), einem Druck von 150 p/cm² und einer Preßzeit von 15 sec. verbügelt. Nach dem Erkalten wird der Zwischenträger abgezogen. Auf dem Oberstoffzuschnitt sitzt nun die über die Schmelzkleberpunkte verankerte Folie auf. Der Griff des Verbundes aus Oberstoff und Folie ist weich. Im Schrägzug ist zu erkennen, daß nur die Klebstoffpunkte die Verbindung mit dem Oberstoff herstellen. Die Zwischenbereiche zwischen den Punkten sind frei.

Nach dem Vernähen der Zuschnitte werden die Nähte mit Streifen des Transferverbundes abgedeckt, mit diesen verbügelt und dabei abgedichtet.
Das oder der gegebenenfalls noch zusätzlich mit
Innenfutter versehene Sakko oder Regenmantel ist
atmungsaktiv, wasserdampfdurchlässig und schützt
den Träger vor Nässe. Das Sakko oder der Regenmantel kann chemisch gereinigt werden und ist
waschbar, wenn der verwendete Oberstoff gewaschen werden kann. Die Wasserdampfdurchlässigkeit ist durch den Klebstoffverbund nur unwesentlich abgeschwächt worden.

Beispiel 2:

Zum Anfertigen eines bahnförmigen Transferverbundes wird das Kaschierwerk der Abb. 1 benutzt. Es besteht aus den beiden Heizwalzen 1 und
2 und den Kühlwalzen 3 und 4. Heizwalze 2 kann
an Kühlwalze 3 mit Preßdruck angefahren werden.
Alle Walzenoberflächen sind glatt. Auf die auf 145
° C beheizte Walze 1 läuft ein stark silikonisiertes
Kraftpapier 7 unter Spannung auf Silikonpapier 7
kommt direkt mit Heizwalze 1 in Berührung. Der
Heizwalze 1 wird der Zwischenträger 5 aus
schwach silikonisiertem Kraftpapier ebenfalls unter
Spannung zugeführt. Schließlich wird auf dem Zwischenträger 5 eine Membranreckfolienrolle 6 glatt
abgerollt. Die Folie wird auf der Heizwalze 1 zwischen dem stark silikonisiertem Kraftpapier und
dem schwach silikonisiertem Zwischenträger eingefaßt und unter dem Anpreßdruck der beiden aufgespannten Papierbahnen von der Heizwalze 1 aufgeheizt. Von Heizwalze 1 wird die unter Spannung
zusammengefaßte 3er-Lage aus stark silikonisiertem Kraftpapier, Folie und Zwischenträger an Heizwalze 2 weitergegeben, die ebenfalls auf 145 ° C
beheizt ist. Vor hier gelangt sie über den Preßspalt
8 zur Kühlwalze 3, die einen Gummiüberzug haben
kann, und anschließend zur Kühlwalze 4, die beide
mit kaltem Wasser durchflossen sind. Nach Kühlwalze 4 wir die 3er-Lage getrennt. Auf einem Wik-
kelbock 9 wird das stark silikonisierte Kraftpapier
aufgewickelt und auf einem zweiten Wickelbock 10
der Zwischenträger mit der daran nun anhaftenden
Folie. Die unkaschierte Membranreckfolie besitzt,
gemessen bei 3 minütiger Temperatureinwirkung
bei 135 ° C einen Längsschrumpf von 14%. Die
Kontaktstrecke auf den Heizwalzen beträgt 3,3 m.
Die Kaschiergeschwindigkeit liegt bei 10 m/min.
Nach dem Kaschiervorgang liegt der Längsschrumpf der abgezogenen Folie bei 2,5%, bei
135 ° C gemessen.

Die Folie dieses Beispiels ist ebenfalls ein thermisch stabilisiertes Polyamid-Elastomer aus
Polyamid- und Polyethylenoxidsegmenten mit folgenden weiteren Kenndaten:
Schmelzbeginn ca. 150 ° C, Meltindex bei 160 ° C und 2,16 kg Belastung 1,2 g/10 min.,
Wasserdampfdurchlässigkeit 1.300 g/m² in 24
Stunden bei 23 ° C und
Feuchtigkeitsgefälle 85 % auf 0 - 1 % rel. Luftfeuchte, Dicke 25 μm.

Beschichtung des Verbundes aus Folie und
Zwischenträger und Verarbeitung des Transfer-Verbundes sind identisch mit Beispiel 1.

Die in dem Beispiel engesetzte Hilfsbahn aus
stark silikonisiertem Kraftpapier kann mehrfach benutzt und auch durch ein stark silikonisiertes Gewebe, das temperaturbeständig sein soll, ersetzt werden. Das Gewebe kann auch eine geschlossene
umlaufende Bahn darstellen, wie in Abb. 1 durch
Laufrichtung 12 angedeutet ist.

Beispiel 3:

Ein unbehandeltes (= nicht mit Trennmittel
versehenes) Kraftpapier der Stärke 50 g/m² wird
mit einer Haftkleberpaste, die eine abgeschwächte
Haftfestigkeit erzeugt, in regelmäßigem 11 Mesh-
Raster im Siebdruck beschichtet. Die verwendete
Siebschablone hat eine Wandstärke von 0,16 mm
und einen Gravurlochdurchmesser von 0,6 mm. Die
Haftkleberpaste besteht aus:
50 GT Plextol DV 240 (= vernetzbare Polyacrylatdispersion der Firma Röhm GmbH, Darmstadt)
2,8 GT Amonstearat
2,5 GT Hoe-Verdicker V 3748 (= Polyacrylatverdicker der Firma Hoechst AG)
50 GT Wasser

Die Auftragsmenge beträgt 4 g/m² Trockenmasse. Unmittelbar hinter der Siebschablone wird
auf die feuchte Haftkleberpaste eine Membranfolie
glatt aufgelegt und auf das Kraftpapier aufkaschiert.
Die Membranfolie ist eine Polyester-Elastomer-Folie und besteht aus Polyterephthalsäurebutylester-
und Polyethylenoxidsegmenten. Sie hat folgende
Kenndaten: Schmelzbeginn 220 ° C, Wasseraufnahme bei Wasserlagerung ca. 30 %, Wasserdampfdurchlässigkeit 1.200 g/m² in 24 Stunden bei
23 ° C und einem Feuchtigkeitsgefälle von 85 %
auf 0 - 1 % rel. Leuftfeuchte, Dicke 15 μm. Der
Kaschierverbund aus Folie und Kraftpapier wird bei
110 - 130 ° C getrocknet. Anschließend wird die
Folienseite des Verbundes mit Schmelzkleberpaste
im 11 Mesh- Raster im Siebdruck beschichtet. Die
Siebschablone ist die gleiche wie oben. Die
Schmelzkleberpaste besteht aus:
180 GT Wasser
1,8 GT Ammonstearat
100 GT Platatherm M 1400 Körnung 0 - 80 μm (=
Polyesterpulver der Firma Ato, Bonn)
10 GT Impranil DLH (= Polyurethan-Dispersion der
Firma Bayer)
5 GT Hoe-Verdicker V 3748 (= Polyacrylat-Verdik-

ker der Firma Hoechst AG)

Die Auftragsmenge beträgt 7 g/m² Trockenmasse. Der pastenbeschichtete Verbund wird bei 140 - 160° C getrocknet und gesintert. Die getrocknete und gesinterte Schmelzkleberbeschichtung belegt ca. 7 % der Folienfläche.

Der Transferverbund aus dem Kraftpapierzwischenträger, Haftkleber, Folie und Schmelzkleber wird zum Anfertigen eines Sportsakkos oder Regenmantels, wie in Beispiel 1, benutzt. Die Zuschnitte des Transferverbundes werden bei einer Temperatur von 140 - 150° C, einem Druck von 150 - 300 p/cm² und einer Preßzeit von ca. 15 sec. auf die Oberstoffzuschnitte aufgebügelt. Nach dem Erkalten wird der Zwischenträger zusammen mit dem Haftkleber abgezogen.

Beispiel 4:

Wie Beispiel 3, jedoch wird anstelle der Polyester-Elastomer-Folie eine mikroporöse Polyfluorethylen-Folie verwendet.

Beispiel 5:

An der Pulverpunktanlage gemäß Abb. 2 wird ein thermostabiles, mit Silikonharz als Trennmittel flächig beschichtetes Trägergewebe 1 vom Gewichtsbereich 150 -ca. 200 g/m² über die Vorheizwalze (2) und die vordere beheizte Preßwalze (3) zugeführt. Beide sind auf eine Temperatur von 200° C aufgeheizt. Auf Preßwalze (3) wird die Polyester-Elastomer-Folie (4) aus Polyterephthalsäurebutylester- und Polyethylenoxidsegmenten mit einem Schmelzbeginn bei 220° C glatt aufgelegt und gelangt zusammen mit dem Trägergewebe in den Preßspalt (5), in dem die Preßwalze 3 an die Gravurwalze (6) angepreßt wird. Die 11 Mesh-Gravur (7) der Gravurwalze mit regelmäßig angeordneten punktförmigen Gravurvertiefungen, die eine Tiefe von 0,25 mm und einem Durchmesser jeder Punktgravur von 0,7 mm besitzen, wird mit Copolyesterschmelzkleberpulver (8) Platatherm M 1400 B, Körnung 0 -160 um (Lieferant Firma Ato, Bonn, Schmelzindex MFI 160° C bei 2,16 kg Belastung 34 g/10 min., Schmelzbereich 115 - 125° C) gefüllt und im Umschlingungsbereich der auf 45° C beheizten Gravurwalze (6) auf dem Weg von Preßspalt (5) zu Preßspalt (8) und in Kontakt mit der hinteren beheizten Preßwalze (9) auf die zwischen Trägergewebe und Gravurwalze eingeschlossene Folie übertragen. Von der Preßwalze (9), die ebenfalls auf 200° C beheizt ist, wird das Trägergewebe und die nun rasterförmig beschichtete Folie von der Gravurwalze übernommen und wieder aufgeheizt. Nach Verlassen der beheizten Preßwalze (9) wird der Träger mit der aufliegenden beschichteten Folie über die auf ca. 160° C beheizte gewölbte Heizfläche (10) gleitend hinweggeführt. Auf de Preßwalze (9) und der Heizfläche (10) findet eine Sinterung des Schmelzkleberpulvers zu punktförmigen Perlen statt. Hinter der Heizfläche (10) wird schließlich noch mit den Walzen (11) und (12), die mit Kühlwasser durchflossen sind, abgekühlt. Nach Verlassen der Kühlwalze (12) werden Träger und beschichtete Folie voneinander getrennt. Die Folie wird auf Wickelbock (13) und das Trägergewebe auf Wickelbock (14) aufgewickelt.

Das Trägergewebe wird immer wieder verwendet.

Die Beschichtung beträgt ca. 7 g/m² und bedeckt etwa 7,5 % der Folienfläche. Die Folie kann zur Herstellung von wasserdichten Bekleidungsstücken, aber auch für Tiefziehwecke Verwendung finden.

## Ansprüche

1. Verfahren zum rasterförmigen Beschichten von flexiblen, vorzugsweise thermoplastischen Kunststoff-Folien mit Schmelzklebern und Verbinden der Folien mit zuzukaschierenden Flächengebilden durch thermisches Verkleben der Schmelzkleberschicht, dadurch gekennzeichnet, daß

a.) ein Verbund aus vorgeformter und ggf. schrumpfreduzierter Kunstoff-Folie der Stärke 10-100 μm, vorzugsweise 10 -35 μm, mit einem flexiblen und verzugsfreien Zwischenträger erzeugt,

b.) die Kunststoff-Folienseite des Verbundes mit der rasterförmigen Schmelzkleberschicht versehen und

c.) der Zwischenträger vor oder nach dem thermischen Verkleben der Schmelzkleberschicht mit dem zuzukaschierenden Flächengebilde abgezogen wird.

2. Verfahren nach Anspruch 1, dadurch gekennzeichnet, daß eine vorgebildete, vorzugsweise thermoplastische Kunststoff-Folie auf einen Zwischenträger durch Druck-und Temperatureinwirkung aufkaschiert wird.

3. Verfahren nach Anspruch 1, dadurch gekennzeichnet, daß die Verbindung einer vorgebildeten, vorzugsweise thermoplastischen Kunststoff-Folie mit dem Zwischenträger durch eine flächig oder vorzugsweise rasterförmig aufgetragene Haftschicht erzeugt wird.

4. Verfahren nach Anspruch 1 und einem der Ansprüche 2 und 3 dadurch gekennzeichnet, daß eine porenfreie Kunststoff-Folie der Stärke 30-100 μm, welche keine oder nur eine geringe Wasseredampfdurchlässigkeit besitzt, auf den Zwischenträger aufkaschiert wird.

5. Verfahren nach Anspruch 1 und einem der Ansprüche 2 und 3 dadurch gekennzeichnet, daß eine Membran-Folie der Stärke 10 - 35 μm mit einer Wasserdampfdurchlässigkeit von 700 - 1400 g Wasser/m² in 24 Stunden bei einem Feuchtigkeitsgefälle von 85% auf 0-1% relativer Luftfeuchte und einer Temperatur von 23°, an der schmelzkleberfreien, unkaschierten Folie gemessen, auf den Zwischenträger aufkaschiert wird.

6. Verfahren nach Anspruch 1 und 5 und einem der Ansprüche 2 und 3, dadurch gekennzeichnet, daß eine Membranfolie auf Basis von thermoplastischen Polyamid-Elastomeren, Polyester-Elastomeren, Polyurethan-Elastomeren, oder mikroporösem Polytetrafluorethylen auf den Zwischenträger aufkaschiert wird.

7. Verfahren nach den Ansprüchen 1,2,5 und 6, dadurch gekennzeichnet, daß porenfreie Membranfolien auf der Basis von thermoplastischen Polyamid-Elastomeren thermisch auf einen Zwischenträger aufkaschiert werden.

8. Verfahren nach den Ansprüchen 1-3 u. 5-7 dadurch gekennzeichnet, daß der Zwischenträger aus Kraftpapier mit einseitig angetragener, dünner,poröser Trennschicht besteht, und der damit erzeugte schmelzkleberbeschichtete Folienverbund als Zuschnitt aus einer Bahn des Verbundes auf flexible Flächengebilde aufgebügelt wird, wovon der Träger dann abgezogen wird.

9. Verfahren nach den Ansprüchen 1,3 und 5-8 dadurch gekennzeichnet, daß eine punktförmig aufgetragene Haftmasse mit reduzierter Haftwirkung,welche Haftmasse sich von der Folie abziehen lässt, zur Herstellung des Folienkaschierverbundes zusammen mit einem Kraftpapier als Zwischenträger verwendet wird und der schmelzkleberbeschichtete Folienkaschierverbund als Zuschnitt aus einer Bahn des Verbundes auf flexible Flächengebilde aufgebügelt wird, wovon der Träger dann abgezogen wird.

10. Verfahren nach den Ansprüchen 1-8, dadurch gekennzeichnet, daß eine geschlossene, feinfädig ausgewebte, temperaturbeständige und verzugsfrei Bahn, die ggf. mit einer Trennschicht versehen ist, als Zwischenträger verwendet wird und die Abtrennung der schmelzkleberbeschichteten Folie als Warenbahn von der Trägerbahn erfolgt.

11. erfahren nach den Ansprüchen 1-8 und 10, dadurch gekennzeichnet, daß eine geschlossene, feinfädig ausgewebte, temperaturbeständige und verzugsfreie Bahn, die ggf. mit einer Trennschicht versehen ist, als Zwischenträger verwendet wird, und die Abtrennung der schmelzkleberbeschichteten Folienbahn von dem Trägerbahngewebe nach dem thermischen Verkleben der Schmelzkleberschicht mit einem weiteren flexiblen Flächengebilde, wie Gewebe, Gewirk, Webgewirk, Vlies, Wirkvlies, Webwirkvlies u.a. vorgenommen wird.

12. Verfahren nach den Ansprüchen 1-8 und 10-11, dadurch gekennzeichnet, daß der Zwischenträger ein umlaufendes Band aus einem geschlossenem, feinfädig ausgewebten, temperaturbeständigen und verzugsfreien Gewebe, das ggf. mit einer Trennschicht versehen ist, oder ein umlaufendes Gummi- oder Metallband darstellt.

13. Verfahren nach den Ansprüchen 1-7 und 10-12 dadurch gekennzeichnet, daß ein Gewebe als Zwischenträger mit einer darauf glatt aufgelegten Folie über eine angepresste Eingangs-Heizwalze einer Pulverpunktanlage zugeführt, Träger und Folie gemeinsam in den Preßspalt zwischen angepresster Eingangs-Heizwalze und Gravurwalze eingeführt werden, anschließend gemeinsam die Gravurwalze umschlingen und dann über eine Ausgangsheizwalze abgeführt werden, wobei die von der Rakeleinrichtung der Pulverpunkteinlage erzeugte Gravurfüllung aus Schmelzkleberpulver auf die Folie übertragen und angesintert wird und schließlich Folie und Zwischenträgergewebe wieder von einander getrennt werden.

14. Verfahren nach den Ansprüchen 1 - 13, dadurch gekennzeichnet, daß die Schmelzkleberbeschichtung in Punktform ausgeführt wird.

15. Verfahren nach den Ansprüchen 1 - 14, dadurch gekennzeichnet, daß die Schmelzkleberbeschichtung aus 100 - 1.000 Punkten/inch² besteht.

16. Verfahren nach den Ansprüchen 1 - 15, dadurch gekennzeichnet, daß ein Trockenbeschichtungsgewicht von 6 - 20 g/m² aufgetragen wird.

17. Verfahren nach den Ansprüchen 1 - 12 und 14 - 16, dadurch gekennzeichnet, daß die Beschichtung im Siebdruck mit Pasten ausgeführt wird.

18. Verfahren nach den Ansprüchen 1 - 17, dadurch gekennzeichnet, daß Schmelzkleber auf Basis von Copolyamiden oder Copolyester,ggf. unter Zusatz von Weichmachern, mit einem Schmelzbeginn zwischen 70 und 130° C aufgetragen werden.

19. Verfahren nach den Ansprüchen 1 - 12 und 14 - 18, dadurch gekennzeichnet, daß die Schmelzkleberbeschichtungsmasse thermoplastisches Polyurethan enthält.

20. Verfahren nach den Ansprüchen 1 - 19, dadurch gekennzeichnet, daß die Schmelzkleberschicht feste oder in Ballons eingeschlossene reaktive Komponenten enthält, die beim Bügelvorgang aufschmelzen bzw. aufbrechen und eine Vernetzung der Schmelzkleberschicht bewirken.

21. Verfahren nach den Ansprüchen 1 - 20, dadurch gekennzeichnet, daß die Schmelzkleberschichtung Bestandteile enthält, die durch chemische Umwandlung oder durch chemischen Zerfall eine Vernetzung der Schmelzkleberschicht beim Bügelvorgang bewirken.

22. Transfereinheit der beschichteten Folie nach den Ansprüchen 1 - 12 und 15 -21, dadurch gekennzeichnet, daß sie aus einem Verbund aus einem abziehbaren Zwischenträger, einer Folie und einer daraufsitzenden rasterförmigen Schmelzkleberbeschichtung besteht, welche zum Aufgügeln der schmelzkleberbeschichteten Folie auf Gewebe, Gewirke, Vliese, Webgewirke, Wirkvliese, Webwirkvliese, Papiere, Pappen, Natur- und Kunstleder, Schaumstoffe, Metallfolien, Kunststoff-Folien, Holzfaserfolien u.a. verwendet wird.

Europäisches
Patentamt

**EUROPÄISCHER RECHERCHENBERICHT**

Nummer der Anmeldung

EP 88 12 0723

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 531 616 (DHJ INDUSTRIES EUROPE) * Ansprüche 1,3,4 * --- | 1 | B 05 D 1/00 D 06 N 7/00 |
| A,D | EP-A-0 238 014 (HÄNSEL TEXTIL) * Ansprüche 1,14 * --- | | |
| A | GB-A-1 493 822 (INMONT CORP.) * Ansprüche 1,6 * --- | | |
| A | GB-A-1 158 421 (LINEN INDUSTRY RESEARCH ASSOCIATION) * Anspruch 1 * ----- | | |
| | | | **RECHERCHIERTE SACHGEBIETE (Int. Cl.5)** |
| | | | C 09 J D 06 N A 41 D |

Der vorliegende Recherchenbericht wurde für alle Patentansprüche erstellt

| Recherchenort | Abschlußdatum der Recherche | Prüfer |
|---|---|---|
| DEN HAAG | 18-08-1989 | GIRARD Y.A. |